# FASCICULE DE BREVET EUROPEEN

(11) **EP 4 016 173 B1**
(45) Date de publication et mention de la délivrance du brevet: **14.08.2024**
(21) Numéro de dépôt: 20216148.5
(22) Date de dépôt: 21.12.2020
(51) Int. Cl.: G02F 1/1333, G02F 1/1335, G04G 9/00

(54) **PROCÉDÉ DE FABRICATION D'UN DISPOSITIF D'AFFICHAGE À CRISTAL LIQUIDE ET DISPOSITIF D'AFFICHAGE A CRISTAL LIQUIDE**
VERFAHREN ZUR HERSTELLUNG EINER FLÜSSIGKRISTALLANZEIGEVORRICHTUNG UND FLÜSSIGKRISTALLANZEIGEVORRICHTUNG
METHOD FOR MANUFACTURING A LIQUID CRYSTAL DISPLAY DEVICE AND LIQUID CRYSTAL DISPLAY DEVICE

(43) Date de publication de la demande: 22.06.2022
(73) Titulaire: The Swatch Group Research and Development Ltd, 2074 Marin (CH)
(72) Inventeur: SAGARDOYBURU, Michel, 2000 Neuchâtel (CH); SPRINGER, Simon, 3007 Berne (CH)
(74) Mandataire: ICB SA

(56) Documents cités:
- JP-A- 2002 022 913
- US-A- 5 926 293
- US-A1- 2003 198 141
- US-A1- 2007 153 162

## Description

### Domaine technique de l'invention

La présente invention concerne un procédé de fabrication d'un dispositif d'affichage à cristal liquide de même qu'un dispositif d'affichage à cristal liquide obtenu notamment grâce à ce procédé. La présente invention concerne en particulier un procédé de fabrication permettant de munir un dispositif d'affichage à cristal liquide d'un motif décoratif et/ou fonctionnel perceptible à travers une surface d'affichage transparente de ce dispositif d'affichage à cristal liquide.

### Arrière-plan technologique de l'invention

La présente invention s'intéresse aux dispositifs d'affichage de type digital, c'est-à-dire les dispositifs d'affichage qui sont capables d'afficher des informations sous forme alphanumérique, par opposition aux dispositifs d'affichage analogiques qui affichent les informations au moyen d'une ou de plusieurs aiguilles qui se déplacent en regard de graduations.

Une famille bien connue de dispositifs d'affichage digitaux regroupe les dispositifs d'affichage à cristaux liquides. Ces dispositifs d'affichage à cristaux liquides comprennent classiquement une cellule à cristaux liquides formée d'un substrat avant transparent situé du côté d'un observateur, et d'un substrat arrière, transparent ou non, qui s'étend parallèlement et à distance du substrat avant. Ces deux substrats avant et arrière sont habituellement réunis entre eux au moyen d'un cadre de scellement qui délimite une enceinte étanche dans laquelle une composition de cristal liquide est confinée. Enfin, les substrats avant et arrière sont revêtus sur leurs faces en regard d'électrodes et de contre-électrodes transparentes électriquement conductrices ; par application d'un champ électrique entre une électrode et une contre-électrode correspondante, on modifie les propriétés optiques de la composition de cristal liquide au point de croisement de l'électrode et de la contre-électrode considérées.

Dans le cadre de la présente invention, on s'intéresse notamment aux cellules à cristaux liquides de type :
- nématique en hélice -encore appelées Twist Nematic ou TN en terminologie anglo-saxonne- ;
- super nématique en hélice -encore appelées Super Twist Nematic ou STN en terminologie anglo-saxonne- ;
- Guest Host ;
- à alignement vertical -encore appelées Vertically Aligned ou VA- ou bien à biréfringence contrôlée électriquement -encore appelées Electrically Controlled Biréfringence ou ECB-.

Pour pouvoir fonctionner en mode réflectif, les cellules à cristaux liquides de type TN, STN, Guest Host, Vertically Aligned ou bien Electrically Controlled Birefringence doivent être munies d'un polariseur réflectif qui, le plus souvent, est laminé contre une face inférieure du substrat arrière et dont la fonction est de réfléchir la lumière qui pénètre dans la cellule à cristal liquide par la face avant de cette dernière et traverse cette cellule à cristal liquide sur toute son épaisseur, jusqu'à se réfléchir sur lui.

Il existe plusieurs types de polariseurs réfléchissants qui, selon le cas, fournissent une réflexion spéculaire ou diffuse. Un premier type de polariseur réflectif se compose d'un polariseur de type absorbant/transparent. Un tel type de polariseur absorbe une première composante de la lumière et transmet l'autre composante de la lumière polarisée selon une direction orthogonale à celle de la première composante. Pour former le polariseur réflectif, on munit la face inférieure du polariseur absorbant/transparent d'un réflecteur, par exemple une couche mince métallique d'aluminium ou d'argent, sur lequel la lumière transmise par le polariseur absorbant/transparent se réfléchit et est renvoyée vers le haut de la cellule à cristal liquide, en direction de l'observateur.

Dans le cas d'un dispositif d'affichage à cristal liquide de type transflectif, c'est-à-dire qui est à la fois réfléchissant et transparent, le polariseur devra être à la fois réfléchissant et transparent. Pour pouvoir obtenir un tel polariseur à la fois partiellement réfléchissant et transparent, une solution consiste à réduire l'épaisseur de la couche métallique dont est muni le polariseur absorbant à une valeur très faible, de l'ordre de quelques nanomètres, que l'on contrôle avec précision. Un tel dispositif d'affichage à cristal liquide transflectif est ensuite équipée d'un dispositif de rétroéclairage disposé sous le substrat arrière et qui émet de la lumière à travers le polariseur partiellement réfléchissant/transparent vers le haut de la cellule à cristal liquide.

Une autre solution pour permettre à une cellule à cristal liquide de type TN, STN, Guest Host, Vertically Aligned ou Electrically Controlled Biréfringence de fonctionner en mode réflectif consiste à équiper une telle cellule à cristal liquide d'un polariseur réflectif/transparent qui réfléchit une direction de polarisation de la lumière et qui est transparent pour la direction de polarisation de la lumière orthogonale. Un tel polariseur réflectif/transparent peut être du type « Coextruded Multilayer Biréfringent Interférence Polarizer » comme celui commercialisé par la société 3M sous la marque Dual Brightness Enhancement Film ou bien du type polariseur à nano-grille également connu sous sa dénomination anglo-saxonne Wire-grid Polarizer. Le polariseur réflectif/transparent est fixé, par exemple par laminage, sur la face inférieure du substrat arrière, et un fond noir ou coloré est ajouté à sa suite pour absorber la lumière qui ne doit pas être réfléchie. Dans le cas où l'on souhaite obtenir une cellule à cristal liquide transflective, le fond noir ou coloré sera seulement partiellement absorbant pour laisser passer la lumière produite par un dispositif de rétroéclairage disposé sous le substrat arrière.

Il existe aussi des dispositifs d'affichage comprenant une cellule à cristal liquide munie d'un unique polariseur sur une face supérieure de son substrat avant, tandis qu'un réflecteur métallique est disposé entre son substrat avant et son substrat arrière.

Les dispositifs d'affichage à cristal liquide de l'art antérieur qui comprennent une cellule d'affichage de type TN, STN, Guest Host, Vertically Aligned ou bien Electrically Controlled Birefringence affichent ainsi des informations sous forme de caractères alphanumériques ou d'icônes qui se détachent sur un fond plan homogène, de type spéculaire ou diffusant. Il y a donc peu de variations d'aspect possibles entre ces dispositifs d'affichage à cristaux liquides de l'art antérieur, de sorte qu'il est difficile pour les fabricants de se démarquer les uns des autres. De même, les objets comme en particulier les montres-bracelets qui sont équipés de tels dispositifs d'affichage à cristaux liquides présentent des aspects très similaires.

Le document US 2007/153162A1 décrit un afficheur comprenant un élément d'affichage produisant des images tel qu'une cellule d'affichage à cristal liquide disposée entre un polariseur avant et un polariseur croisé. Un transflecteur holographique est disposé à l'arrière de la cellule d'affichage à cristal liquide. Ce transflecteur holographique a à la fois des propriétés de réflexion et de transmission de la lumière. Le document JP 2002 022913 A constitue un document de l'art antérieur considéré comme utile à la compréhension de l'invention.

### Résumé de l'invention

La présente invention a pour but de remédier aux problèmes mentionnés ci-dessus ainsi qu'à d'autres encore en procurant un procédé de fabrication permettant de réaliser des dispositifs d'affichage à cristaux liquides de type réflectif ou transflectif dont les aspects peuvent être variés à l'infini. La présente invention a également pour but de procurer des dispositifs d'affichage à cristaux liquides de type réflectif ou transflectif qui présentent un aspect esthétique original.

A cet effet, la présente invention concerne un procédé de fabrication d'un dispositif d'affichage à cristal liquide réflectif ou transflectif selon la revendication 1 et comprenant, entre autres, une cellule à cristal liquide dont les molécules de cristal liquide sont alignées de manière planaire ou verticale, cette cellule à cristal liquide étant formée d'un substrat avant transparent situé du côté d'un observateur, et d'un substrat arrière, également transparent, qui s'étend sous le substrat avant, parallèlement et à distance de celui-ci, ces deux substrats avant et arrière étant réunis entre eux au moyen d'un cadre de scellement qui délimite une enceinte étanche dans laquelle une composition de cristal liquide est confinée, les substrats avant et arrière étant revêtus sur leurs faces en regard d'électrodes et de contre-électrodes transparentes électriquement conductrices, les propriétés optiques de la composition de cristal liquide étant modifiées par application d'un champ électrique au point de croisement entre une électrode et une contre-électrode correspondante, le dispositif d'affichage à cristal liquide étant muni d'un film polarisant réflecteur agencé pour absorber une première composante d'une lumière qui pénètre dans la cellule à cristal liquide par le substrat avant, et pour réfléchir une seconde composante de la lumière polarisée selon une direction orthogonale à celle de la première composante, ce film polarisant réflecteur comprenant un polariseur absorbant combiné avec un réflecteur au moins partiellement réfléchissant disposé sous le polariseur absorbant, le procédé comprenant l'étape qui consiste à mettre le réflecteur en relief pour lui impartir une forme décorative et/ou fonctionnelle visible par l'observateur à travers le substrat avant de la cellule à cristal liquide, puis à fixer ce réflecteur sous le polariseur absorbant qui est lui-même fixé contre une face inférieure du substrat arrière.

Selon l'invention
- le réflecteur au moins partiellement réfléchissant est obtenu par mise en relief d'une couche de matériau transparent comprenant une face arrière à laquelle on impartit la forme en relief décorative et/ou fonctionnelle recherchée et sur laquelle on dépose une couche au moins partiellement réfléchissante, la couche de matériau transparent comprenant également une face avant opposée à la face arrière et sur laquelle est fixé un polariseur absorbant via une colle diffusante, le film polarisant réflecteur formé de la couche au moins partiellement réfléchissante et du polariseur absorbant étant fixé via ce polariseur absorbant contre la face inférieure du substrat arrière éventuellement au moyen d'une couche d'adhésif optiquement transparent ; selon des formes particulières de l'invention:
- la couche au moins partiellement réfléchissante est métallique ;
- le métal est choisi dans le groupe formé par l'argent, l'aluminium, le nickel, le chrome, le titane, le platine, le palladium, l'or ainsi que les alliages de ces métaux ;
- la couche au moins partiellement réfléchissante est obtenue par dépôt physique en phase vapeur, évaporation ou pulvérisation cathodique ;
- la couche au moins partiellement réfléchissante est formée d'une pluralité de couches de matériaux diélectriques ayant des indices de réfraction différents les uns des autres et formant un miroir diélectrique ;
- la couche de matériau transparent est en résine ;
- la couche de matériau transparent est formée par injection de résine ou par thermoformage d'une feuille de résine ;

La présente invention concerne également un dispositif d'affichage à cristal liquide réflectif ou transflectif selon la revendication 9 et comprenant, entre autres, une cellule à cristal liquide dont les molécules de cristal liquide sont alignées de manière planaire ou verticale, cette cellule à cristal liquide étant formée d'un substrat avant transparent situé du côté d'un observateur, et d'un substrat arrière, également transparent, qui s'étend sous le substrat avant, parallèlement et à distance de celui-ci, ces deux substrats avant et arrière étant réunis entre eux au moyen d'un cadre de scellement qui délimite une enceinte étanche dans laquelle une composition de cristal liquide est confinée, les substrats avant et arrière étant revêtus sur leurs faces en regard d'électrodes et de contre-électrodes transparentes électriquement conductrices, les propriétés optiques de la composition de cristal liquide étant modifiées par application d'un champ électrique au point de croisement entre une électrode et une contre-électrode correspondante, le dispositif d'affichage à cristal liquide étant muni d'un film polarisant réflecteur pour absorber une première composante d'une lumière qui pénètre dans la cellule à cristal liquide par le substrat avant, et pour réfléchir une seconde composante de la lumière polarisée selon une direction orthogonale à celle de la première composante, le film polarisant réflecteur comprenant un polariseur absorbant combiné avec un réflecteur au moins partiellement réfléchissant disposé sous le polariseur absorbant, le réflecteur présentant une forme décorative et/ou fonctionnelle en relief visible par un observateur à travers le substrat avant de la cellule à cristal liquide, le film polarisant réflecteur étant fixé contre une face inférieure du substrat arrière de la cellule à cristal liquide via le polariseur absorbant au moyen d'une couche d'adhésif optiquement transparent.

Selon l'invention
- le réflecteur au moins partiellement réfléchissant comprend une couche de matériau transparent qui présente la forme en relief décorative et/ou fonctionnelle recherchée et dont une face arrière est recouverte d'une couche au moins partiellement réfléchissante, la couche de matériau transparent comprenant également une face avant opposée à la face arrière recouverte d'une couche de matériau transparent sur laquelle est fixé le polariseur absorbant via une colle diffusante; selon des formes particulères de l'invention :
- le réflecteur au moins partiellement réfléchissant est métallique ;
- le métal dans lequel est réalisé le réflecteur au moins partiellement réfléchissant est choisi dans le groupe formé par l'argent, l'aluminium, le nickel, le chrome, le titane, le platine, le palladium, l'or ainsi que les alliages de ces métaux ;
- la couche au moins partiellement réfléchissante est formée d'une pluralité de couches de matériaux diélectriques ayant des indices de réfraction différents les uns des autres et formant un miroir diélectrique ;
- la couche de matériau transparent est en résine ;

L'invention concerne également une pièce d'horlogerie comprenant un dispositif d'affichage du genre ci-dessus.

Grâce à ces caractéristiques, la présente invention procure un procédé de fabrication de dispositifs d'affichage à cristaux liquides réflectifs ou transflectifs qui affichent des informations alphabétiques, numériques ou autres sur des fonds en relief qui présentent des aspects novateurs et très différents les uns des autres. Ce résultat est atteint en enseignant d'imprimer au réflecteur des formes en relief qui vont être perceptibles à l'oeil nu par le porteur de la montre lorsqu'il va regarder la surface d'affichage utile de la cellule à cristal liquide. En particulier, dans le cas où un dispositif d'affichage à cristal liquide selon l'invention est embarqué dans une montre-bracelet, on peut mettre le réflecteur en relief pour lui donner une texture imitant l'aspect des cadrans de montre classiques : clous de Paris, côtes de Genève, effet tissage, brossé soleil, guillochages etc. On peut également imprimer au réflecteur de simples variations de hauteurs pour mettre en évidence des zones avec ou sans texture, ou bien des zones de la surface d'affichage utile de la cellule à cristal liquide où se trouvent des segments d'affichage. Enfin, grâce à l'invention, il est aussi possible d'imprimer dans le réflecteur des motifs figuratifs tels que des motifs végétaux, ou bien des motifs inspirés de camés, de faces de pièces de monnaies, de sculptures ou bien encore de bas-reliefs. La présente invention permet ainsi aux fabricants de montres ou d'autres produits électroniques comprenant un dispositif d'affichage à cristal liquide réflectif ou transflectif d'offrir à leurs clients des objets dont l'esthétique est originale et se démarque de la concurrence tout en utilisant une technologie à base de cristal liquide conventionnelle et bien maîtrisée et donc fiable et peu onéreuse. La possibilité qu'offre la présente invention de changer facilement le décor arrière d'un dispositif d'affichage à cristal liquide permet aux fabricants de disposer d'une large gamme de produits ayant des aspects esthétiques différents mais qui repose sur une plateforme technologique commune, ce qui permet de mutualiser les coûts de fabrication. Par exemple, la forme des segments et des icônes d'une cellule à cristal liquide selon l'invention pourra être commune à plusieurs dispositifs d'affichage ayant néanmoins des éléments décoratifs et/ou techniques différents.

### Brève description des figures

D'autres caractéristiques et avantages de la présente invention ressortiront plus clairement de la description détaillée qui suit d'un mode de mise en oeuvre du procédé selon l'invention, cet exemple étant donné à titre purement illustratif et non limitatif seulement en liaison avec le dessin annexé sur lequel :

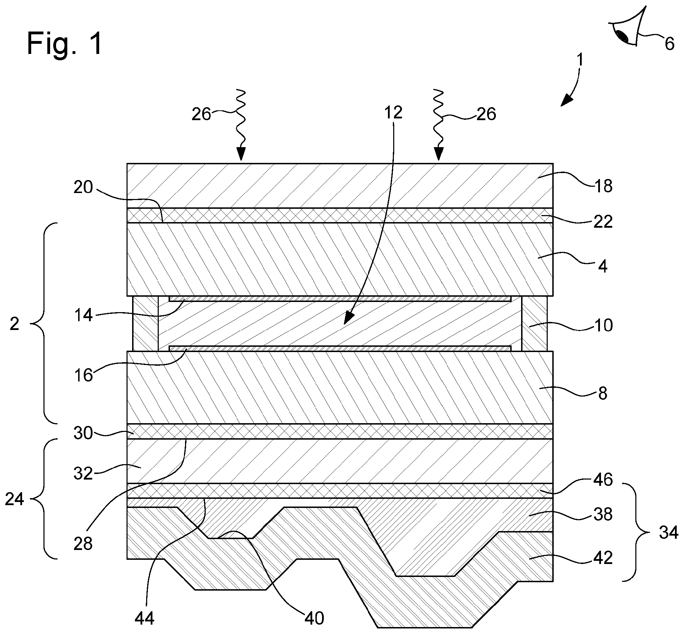

- la figure 1 illustre schématiquement en coupe d'un dispositif d'affichage à cristal liquide comprenant une cellule à cristal liquide et un film polarisant réflecteur formé d'un réflecteur mis en relief et d'un polariseur absorbant via lequel le film polarisant réflecteur est fixé au moyen d'une couche d'adhésif optiquement transparent contre une face inférieure d'un substrat arrière de la cellule à cristal liquide ;

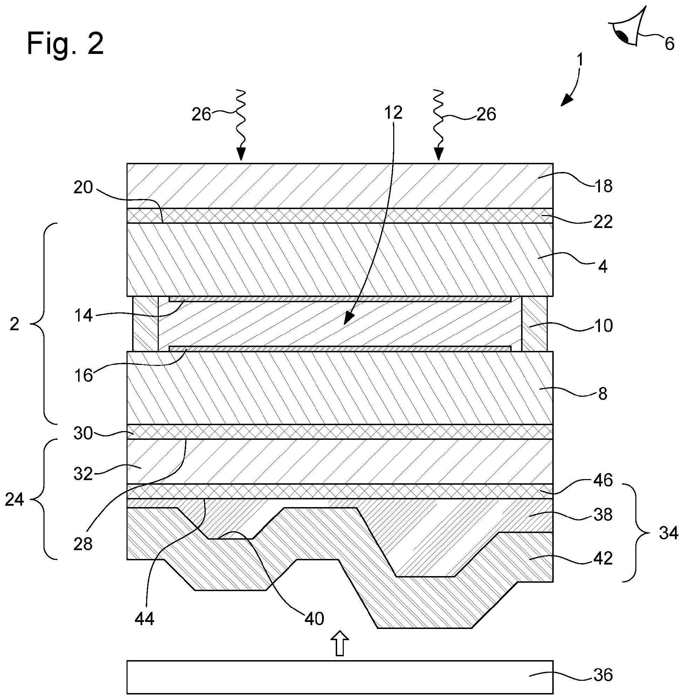

- la figure 2 est une vue analogue à celle de la figure 1, un dispositif de rétroéclairage étant disposé sous le dispositif d'affichage à cristal liquide, et

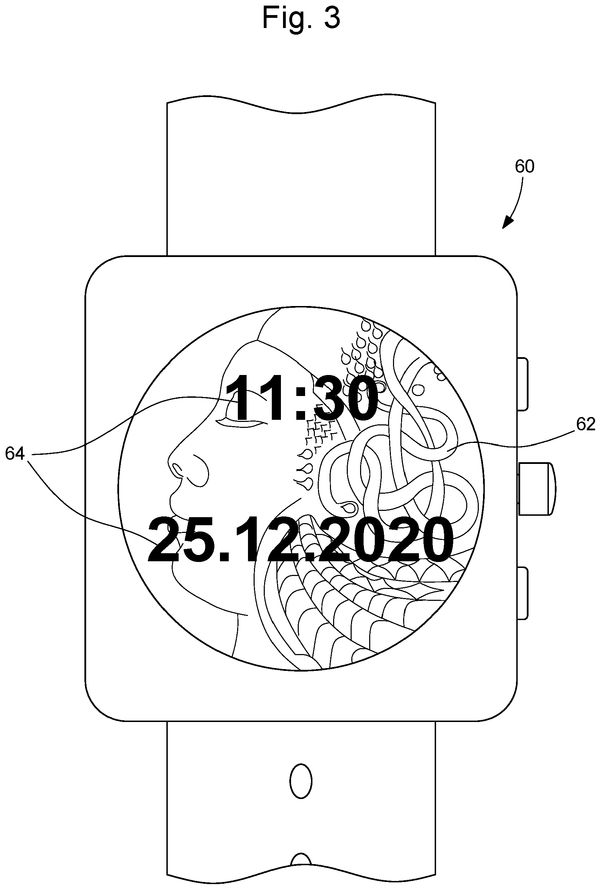

- la figure 3 est une vue d'une montre-bracelet équipée d'une cellule à cristal liquide dont le film polarisant réflecteur, disposé sous le dispositif d'affichage à cristal liquide, a été mis en relief pour afficher une image figurative d'un camé à travers la surface d'affichage utile de la cellule à cristal liquide.

### Description détaillée de l'invention

La figure 1 est une vue en coupe d'un dispositif d'affichage à cristal liquide désigné dans son ensemble par la référence numérique générale 1. Ce dispositif d'affichage à cristal liquide 1 comprend une cellule à cristal liquide 2 qui comporte un substrat avant 4 transparent situé du côté d'un observateur 6, et un substrat arrière 8, également transparent, qui s'étend sous le substrat avant 4, parallèlement et à distance de celui-ci. Les deux substrats avant 4 et arrière 8 sont réunis entre eux au moyen d'un cadre de scellement 10 qui délimite une enceinte étanche 12 dans laquelle une composition de cristal liquide est confinée. Les substrats avant 4 et arrière 8 sont revêtus sur leurs faces en regard d'électrodes 14 et de contre-électrodes 16 transparentes électriquement conductrices. Les propriétés optiques de la composition de cristal liquide sont modifiées par application d'un champ électrique au point de croisement entre une électrode 14 et une contre-électrode 16 correspondante. La cellule à cristal liquide 2 est munie également d'un polariseur absorbant 18 collé sur la face supérieure 20 du substrat avant 4 au moyen d'une couche d'adhésif 22 optiquement transparent, encore connu sous sa dénomination anglo-saxonne Optical Clear Adhesive ou OCA.

Enfin, la cellule à cristal liquide 2 est munie d'un film polarisant réflecteur 24 agencé pour absorber une première composante d'une lumière 26 qui pénètre dans la cellule à cristal liquide 2 par le substrat avant 4, et pour réfléchir une seconde composante de la lumière polarisée selon une direction orthogonale à celle de la première composante. Ce film polarisant réflecteur 24 est fixé contre une face inférieure 28 du substrat arrière 8 au moyen d'une couche d'adhésif 30 optiquement transparent du type OCA.

Le film polarisant réflecteur 24 comprend un polariseur absorbant 32 combiné avec un réflecteur 34 au moins partiellement réfléchissant. Selon que ce réflecteur 34 est partiellement ou totalement réfléchissant, le dispositif d'affichage 1 est transflectif, respectivement réflectif. Dans le cas où le dispositif d'affichage 1 est transflectif, un dispositif de rétroéclairage 36 est disposé sous le film polarisant réflecteur 24 (voir figure 2).

Le procédé selon l'invention comprend l'étape qui consiste à mettre le réflecteur 34 en relief pour lui impartir une forme décorative et/ou fonctionnelle visible par l'observateur 6 à travers le substrat avant 4 de la cellule à cristal liquide 2, puis à fixer ce réflecteur 34 sous le polariseur absorbant 32 qui est lui-même fixé contre la face inférieure 28 du substrat arrière 8 au moyen de la couche d'adhésif 30 optiquement transparent.

Le réflecteur 34 au moins partiellement réfléchissant est obtenu par mise en forme d'une couche de matériau transparent 38 à laquelle on impartit la forme en relief décorative et/ou fonctionnelle recherchée. Cette couche de matériau transparent 38 comprend une face arrière 40 qui présente les formes en relief recherchées et sur laquelle on dépose une couche 42 au moins partiellement réfléchissante, ainsi qu'une face avant 44 plane opposée à la face arrière 40. Le polariseur absorbant 32 est fixé sur la face avant 44 plane de la couche de matériau transparent 38 au moyen d'une couche d'adhésif 46 formée d'un adhésif.

Cette couche d'adhésif 46 peut se présenter sous la forme d'un film sensible à la pression qui est laminé sur la couche de matériau transparent 38 ou est dispensée en couche de colle liquide sur cette couche de matériau transparent 38. Finalement, le polariseur absorbant 32 est recouvert de la couche d'adhésif 30 formée d'un adhésif optiquement transparent du type Optical Clear Adhesive ou OCA. Après solidarisation du polariseur absorbant 32 sur la couche de matériau transparent 38 via la couche d'adhésif 46, on obtient le film polarisant réflecteur 24 qui est à son tour solidarisé contre la face inférieure 28 du substrat arrière 8 de la cellule à cristal liquide 2 au moyen de la couche d'adhésif 30 optiquement transparent.

La couche 42 au moins partiellement réfléchissante qui est déposée sur la face arrière 40 de la couche de matériau transparent 38 pour former le réflecteur 34 peut être métallique. Le métal est alors avantageusement choisi dans le groupe formé par l'argent, l'aluminium, le nickel, le chrome, le titane, le platine, le palladium, l'or et les alliages de ces métaux. Cette couche 42 au moins partiellement réfléchissante peut être non limitativement déposée par dépôt physique en phase vapeur, par évaporation ou par pulvérisation cathodique. Cette couche 42 au moins partiellement réfléchissante peut aussi être formée d'une pluralité de couches de matériaux diélectriques ayant des indices de réfraction différents les uns des autres et formant un miroir diélectrique.

En ce qui concerne la couche de matériau transparent 38 sur la face arrière 40 de laquelle est déposée la couche 42 au moins partiellement réfléchissante, celle-ci peut être réalisée en résine, par exemple par injection d'une telle résine ou par thermoformage d'une feuille de résine. La résine peut ainsi être injectée dans un moule dont l'une des parties présente les formes en relief correspondant aux formes que l'on cherche à donner au réflecteur 34. Si la résine utilisée est photosensible, elle peut être solidifiée par exposition à un rayonnement ultraviolet lorsqu'elle se trouve entre les deux parties du moule. Dans le cas où l'on utilise comme matériau de base une feuille de résine, la mise en relief de celle-ci peut être obtenue par déformation à froid ou à chaud contre un moule présentant les formes en relief qui correspondent aux formes que l'on cherche à donner à cette feuille de résine pour obtenir le réflecteur 34 recherché. Si la résine à l'état de feuille est photosensible, sa forme peut être figée par exposition à un rayonnement ultraviolet.

Une fois la couche de matériau transparent 38 mise en forme et revêtue sur sa face arrière 40 de la couche 42 au moins partiellement réfléchissante pour former le réflecteur 34, on fixe sur sa face avant 44 le polariseur absorbant 32. Avant ou après polymérisation de la couche de matériau transparent 38, on dépose sur cette couche de matériau transparent 38 la couche d'adhésif 46 optiquement transparent au moyen de laquelle le polariseur absorbant 32 est fixé sur cette couche de matériau transparent 38.

Dans un mode de réalisation non couvert par l'invention, le réflecteur 34 au moins partiellement réfléchissant peut également être obtenu par mise en relief d'un film métallique au moins partiellement réfléchissant ou d'un film plastique revêtu sur une face arrière d'une couche au moins partiellement réfléchissante, par exemple métallique. Une face avant du film métallique ou du film plastique revêtu est ensuite recouverte de la couche de matériau transparent 38 sur laquelle est fixé le polariseur absorbant 32 au moyen de la couche d'adhésif 46 optiquement transparent. Le film polarisant réflecteur 24 formé du réflecteur 34 et du polariseur absorbant 32 est fixé via ce polariseur absorbant 32 contre la face inférieure 28 du substrat arrière 8 de la cellule à cristal liquide 2 au moyen de la couche d'adhésif 30 optiquement transparent.

La figure 3 est une vue d'une montre-bracelet 60 équipée d'une cellule à cristal liquide dont le film polarisant réflecteur, disposé sous le dispositif d'affichage à cristal liquide, a été mis en relief pour afficher une image figurative 62 d'un camé à travers la surface d'affichage utile de la cellule à cristal liquide. On voit ainsi que les informations utiles 64 affichées par le dispositif d'affichage à cristal liquide se superposent à l'image figurative 62 formée dans le film polarisant réflecteur, de manière permanente ou à la demande, ce qui confère à la montre-bracelet 60 un aspect esthétique tout à fait remarquable et novateur. Bien entendu, le film polarisant réflecteur peut être mis en forme pour afficher non pas une image figurative mais des informations techniques comme par exemple une graduation qui va coopérer avec une information affichée par le dispositif d'affichage à cristal liquide.

Il va de soi que la présente invention n'est pas limitée aux modes de réalisation d'un dispositif d'affichage à cristal liquide réflectif ou transflectif qui viennent d'être décrits et que diverses modifications et variantes simples peuvent être envisagées par l'homme du métier sans sortir du cadre de l'invention tel que défini par les revendications annexées. On rappellera en particulier que par polariseur réflectif on entend un polariseur qui réfléchit une direction de polarisation de la lumière et qui transmet la direction de polarisation de la lumière orthogonale. De même, on entend par polariseur absorbant un polariseur qui absorbe une composante de la lumière et qui transmet l'autre composante de la lumière qui est orthogonale à la composante de la lumière absorbée. On notera également que la présente invention s'applique à des cellules à cristal liquide dont les molécules de cristal liquide sont alignées de manière planaire, c'est-à-dire avec leur grand axe qui s'étend parallèlement aux substrats de la cellule à cristal liquide, ou bien dont les molécules de cristal liquide sont alignées de manière verticale, c'est-à-dire avec leur grand axe qui s'étend perpendiculairement aux substrats de la cellule à cristal liquide. Des exemples de telles cellules à cristaux liquides sont donnés par les cellules à cristaux liquide de type nématique en hélice, super nématique en hélice, guest host ou bien encore à alignement vertical ou à biréfringence contrôlée électriquement, mieux connues sous leurs dénomination anglo-saxonnes respectives Vertically Aligned ou VA et Electrically Controlled Biréfringence ou ECB. On notera aussi que les couches d'adhésif 30, 38 et 46 peuvent être faites au moyen d'un matériau légèrement diffusant, afin d'apporter un aspect mat ou satiné à la lumière réfléchie. Selon l'invention, la couche d'adhésif 46 est faite au moyen d'un matériau diffusant afin d'apporter un aspect mat ou satiné à la lumière réfléchie.

L'invention concerne également une pièce d'horlogerie, en particulier une montre-bracelet, équipée d'un dispositif d'affichage à cristal liquide 1 du type décrit ci-dessus. Le porteur de la montre va ainsi voir à travers le substrat avant 4 de la cellule à cristal liquide 2, en arrière-plan des informations affichées par cette cellule à cristal liquide 2, le décor ou toute autre indication fonctionnelle imprimé en relief dans le film polarisant réflecteur 24, ce qui permet de donner à cette montre un aspect qui lui est propre et qui se distingue de l'aspect des montres de la concurrence.

### Nomenclature

1. Dispositif d'affichage à cristal liquide
2. Cellule à cristal liquide
4. Substrat avant
6. Observateur
8. Substrat arrière
10. Cadre de scellement
12. Enceinte étanche
14. Electrodes
16. Contre-électrodes
18. Polariseur absorbant
20. Face supérieure
22. Couche d'adhésif
24. Film polarisant réflecteur
26. Lumière
28. Face inférieure
30. Couche d'adhésif
32. Polariseur absorbant
34. Réflecteur
36. Dispositif de rétroéclairage
38. Couche de matériau transparent
40. Face arrière
42. Couche
44. Face avant
46. Couche d'adhésif
60. Montre-bracelet
62. Image figurative
64. Informations utiles

## Revendications

1. Procédé de fabrication d'un dispositif d'affichage à cristal liquide (1) réflectif ou transflectif comprenant une cellule à cristal liquide (2) dont les molécules de cristal liquide sont alignées de manière planaire ou verticale, cette cellule à cristal liquide (2) étant formée d'un substrat avant (4) transparent situé du côté d'un observateur (6), et d'un substrat arrière (8), également transparent, qui s'étend sous le substrat avant (4), parallèlement et à distance de celui-ci, ces deux substrats avant (4) et arrière (8) étant réunis entre eux au moyen d'un cadre de scellement (10) qui délimite une enceinte étanche (12) dans laquelle une composition de cristal liquide est confinée, les substrats avant (4) et arrière (8) étant revêtus sur leurs faces en regard d'électrodes (14) et de contre-électrodes (16) transparentes électriquement conductrices, les propriétés optiques de la composition de cristal liquide étant modifiées par application d'un champ électrique au point de croisement entre une électrode (14) et une contre-électrode (16) correspondante, le dispositif d'affichage à cristal liquide (1) étant muni d'un film polarisant réflecteur (24) agencé pour absorber une première composante d'une lumière (26) qui pénètre dans la cellule à cristal liquide (2) par le substrat avant (4), et pour réfléchir une seconde composante de la lumière (26) polarisée selon une direction orthogonale à celle de la première composante, ce film polarisant réflecteur (24) comprenant un polariseur absorbant (32) combiné avec un réflecteur (34) au moins partiellement réfléchissant disposé sous le polariseur absorbant (32), le réflecteur comprenant une couche de matériau transparent (38) comprenant une face arrière (40) et une face avant (44) plane, le procédé comprenant l'étape qui consiste à mettre la couche de matériau transparent (38) que comprend le réflecteur (34) en relief pour lui impartir une forme décorative et/ou fonctionnelle visible par l'observateur (6) à travers le substrat avant (4) de la cellule à cristal liquide (2), et l'étape de dépôt d'une couche (42) au moins partiellement réfléchissante sur ladite face arrière (40) qui présente les formes en relief, puis à fixer ce réflecteur (34) sous le polariseur absorbant (32) qui est lui-même fixé contre une face inférieure (28) du substrat arrière (8) en fixant la couche de matériau transparent (38) au polariseur absorbant (32) au moyen d'une couche d'adhésif qui diffuse la lumière afin d'apporter un aspect mat ou satiné à la lumière réfléchie; la couche d'adhésif étant agencée sur ladite face avant.

2. Procédé de fabrication selon la revendication 1, **caractérisé en ce que** le film polarisant réflecteur (24) formé de la couche (42) au moins partiellement réfléchissante, de la couche de matériau transparent (38) et du polariseur absorbant (32) étant fixé via ce polariseur absorbant (32) contre la face inférieure (28) du substrat arrière (8) au moyen d'une couche d'adhésif (30) optiquement transparent.

3. Procédé de fabrication selon la revendication 2, **caractérisé en ce que** la couche (42) au moins partiellement réfléchissante est métallique.

4. Procédé de fabrication selon la revendication 3, **caractérisé en ce que** le métal est choisi dans le groupe formé par l'argent, l'aluminium, le nickel, le chrome, le titane, le platine, le palladium, l'or et les alliages de ces métaux.

5. Procédé de fabrication selon l'une des revendications 3 et 4, **caractérisé en ce que** la couche (42) au moins partiellement réfléchissante est obtenue par dépôt physique en phase vapeur, évaporation ou pulvérisation cathodique.

6. Procédé de fabrication selon la revendication 2, **caractérisé en ce que** la couche (42) au moins partiellement réfléchissante est formée d'une pluralité de couches de matériaux diélectriques ayant des indices de réfraction différents les uns des autres et formant un miroir diélectrique.

7. Procédé de fabrication selon l'une des revendications 2 à 6, **caractérisé en ce que** la couche de matériau transparent (38) est en résine.

8. Procédé de fabrication selon la revendication 7, **caractérisé en ce que** la couche de matériau transparent (38) est formée par injection de résine ou par thermoformage d'une feuille de résine.

9. Dispositif d'affichage à cristal liquide (1) réflectif ou transflectif comprenant une cellule à cristal liquide (2) dont les molécules de cristal liquide sont alignées de manière planaire ou verticale, cette cellule à cristal liquide (2) étant formée d'un substrat avant (4) transparent situé du côté d'un observateur, et d'un substrat arrière (8), également transparent, qui s'étend sous le substrat avant (4), parallèlement et à distance de celui-ci, ces deux substrats avant (4) et arrière (8) étant réunis entre eux au moyen d'un cadre de scellement (10) qui délimite une enceinte étanche (12) dans laquelle une composition de cristal liquide est confinée, les substrats avant (4) et arrière (8) étant revêtus sur leurs faces en regard d'électrodes (14) et de contre-électrodes (16) transparentes électriquement conductrices, les propriétés optiques de la composition de cristal liquide étant modifiées par application d'un champ électrique au point de croisement entre une électrode (14) et une contre-électrode (16) correspondante, le dispositif d'affichage à cristal liquide (1) étant muni d'un film polarisant réflecteur (24) pour absorber une première composante d'une lumière (26) qui pénètre dans la cellule à cristal liquide (2) par le substrat avant (4), et pour réfléchir une seconde composante de la lumière (26) polarisée selon une direction orthogonale à celle de la première composante, le film polarisant réflecteur (24) comprenant un polariseur absorbant (32) combiné avec un réflecteur (34) au moins partiellement réfléchissant disposé sous le polariseur absorbant (32), le réflecteur (34) comprenant une couche de matériau transparent (38), la couche de matériau transparent (38) comprenant une face avant (44) plane et une face arrière (40) présentant une forme décorative et/ou fonctionnelle en relief visible par un observateur (6) à travers le substrat avant (4) de la cellule à cristal liquide (2), le réflecteur (34) étant fixé sous le polariseur absorbant (32) sur ladite face avant au moyen d'une couche d'adhésif (46), la couche d'adhésif diffusant la lumière afin d'apporter un aspect mat ou satiné à la lumière réfléchie; le film polarisant réflecteur (24) étant fixé contre une face inférieure (28) du substrat arrière (8) de la cellule à cristal liquide (2) via le polariseur absorbant (32) au moyen d'une couche d'adhésif optiquement transparent (30).

10. Dispositif d'affichage à cristal liquide selon la revendication 9, **caractérisé en ce que** la couche (42) au moins partiellement réfléchissante est métallique.

11. Dispositif d'affichage à cristal liquide selon la revendication 10, **caractérisé en ce que** le métal dans lequel est réalisée la couche (42) au moins partiellement réfléchissante est choisi dans le groupe formé par l'argent, l'aluminium, le nickel, le chrome, le titane, le platine, le palladium, l'or et les alliages de ces métaux.

12. Dispositif d'affichage à cristal liquide selon la revendication 9, **caractérisé en ce que** la couche (42) au moins partiellement réfléchissante est formée d'une pluralité de couches de matériaux diélectriques ayant des indices de réfraction différents les uns des autres et formant un miroir diélectrique.

13. Dispositif d'affichage à cristal liquide selon l'une des revendications 9 à 12, **caractérisé en ce que** la couche de matériau transparent (38) est en résine.

14. Pièce d'horlogerie comprenant un dispositif d'affichage selon l'une des revendications 9 à 13.

## Patentansprüche

1. Verfahren zur Herstellung einer reflektiven oder transreflektiven Flüssigkristallanzeigevorrichtung (1), umfassend eine Flüssigkristallzelle (2), deren Flüssigkristallmoleküle planar oder vertikal ausgerichtet sind, wobei diese Flüssigkristallzelle (2) aus einem vorderen transparenten Substrat (4) gebildet wird, das sich auf der Seite eines Betrachters (6) befindet, und einem hinteren, ebenfalls transparenten Substrat (8), das sich unter dem vorderen Substrat (4) parallel und dazu beabstandet erstreckt, wobei diese beiden vorderen (4) und hinteren (8) Substrate mittels eines Versiegelungsrahmens (10) miteinander vereint sind, der eine dichte Schutzhülle (12) begrenzt, in der eine Flüssigkristallzusammensetzung eingeschlossen ist, das vordere (4) und das hintere (8) Substrat auf ihren einander zugewandten Seiten mit transparenten, elektrisch leitenden Elektroden (14) und Gegenelektroden (16) beschichtet sind, wobei die optischen Eigenschaften der Flüssigkristallzusammensetzung durch Anlegen eines elektrischen Feldes an den Kreuzungspunkt zwischen einer Elektrode (14) und einer entsprechenden Gegenelektrode (16) modifiziert werden, wobei die Flüssigkristallanzeigevorrichtung (1) mit einem reflektierenden Polarisationsfilm (24) versehen ist, der angeordnet ist, um eine erste Komponente eines Lichts (26) zu absorbieren, das durch das vordere Substrat (4) in die Flüssigkristallzelle (2) eindringt, und um eine zweite Komponente des Lichts (26), das in einer Richtung orthogonal zu jener der ersten Komponente polarisiert ist, zu reflektieren, wobei dieser reflektierende Polarisationsfilm (24) einen absorbierenden Polarisator (32) umfasst, der mit einem zumindest teilweise reflektierenden Reflektor (34) kombiniert ist, der unter dem absorbierenden Polarisator (32) angeordnet ist, wobei der Reflektor eine Schicht aus transparentem Werkstoff (38) umfasst, der eine Rückseite (40) und eine ebene Vorderseite (44) umfasst, wobei das Verfahren den Schritt umfasst, der darin besteht, die Schicht aus transparentem Werkstoff (38), die der Reflektor (34) umfasst, hervorzuheben, um ihr eine dekorative und/oder funktionelle Form zu verleihen, die durch den Betrachter (6) durch das vordere Substrat (4) der Flüssigkristallzelle (2) hindurch sichtbar ist, und den Schritt des Hinterlegens einer zumindest teilweise reflektierenden Schicht (42) auf der Rückseite (40), die die hervorgehobenen Formen aufweist, und diesen Reflektor (34) dann unter dem absorbierenden Polarisator (32) zu befestigen, der seinerseits an einer Unterseite (28) des hinteren Substrats (8) befestigt ist, indem die Schicht aus transparentem Werkstoff (38) anhand einer Klebstoffschicht an dem absorbierenden Polarisator (32) befestigt wird, die das Licht streut, um dem reflektierten Licht ein mattes oder satiniertes Aussehen zu verleihen; wobei die Klebstoffschicht auf der Vorderseite angeordnet ist.

2. Verfahren zur Herstellung nach Anspruch 1, **dadurch gekennzeichnet, dass** der reflektierende Polarisationsfilm (24), der aus der zumindest teilweise reflektierenden Schicht (42), der Schicht aus transparentem Werkstoff (38) und dem absorbierenden Polarisator (32) gebildet wird, über diesen absorbierenden Polarisator (32) an der Unterseite (28) des hinteren Substrats (8) anhand einer Schicht aus optisch transparentem Klebstoff (30) befestigt wird.

3. Verfahren zur Herstellung nach Anspruch 2, **dadurch gekennzeichnet, dass** die zumindest teilweise reflektierende Schicht (42) metallisch ist.

4. Verfahren zur Herstellung nach Anspruch 3, **dadurch gekennzeichnet, dass** das Metall aus der Gruppe gebildet durch Silber, Aluminium, Nickel, Chrom, Titan, Platin, Palladium, Gold und den Legierungen dieser Metalle ausgewählt ist.

5. Verfahren zur Herstellung nach einem der Ansprüche 3 und 4, **dadurch gekennzeichnet, dass** die zumindest teilweise reflektierende Schicht (42) durch physikalische Hinterlegung aus der Dampfphase, Verdampfung oder Sputtern erhalten wird.

6. Verfahren zur Herstellung nach Anspruch 2, **dadurch gekennzeichnet, dass** die zumindest teilweise reflektierende Schicht (42) aus einer Vielzahl von Schichten aus dielektrischen Werkstoffen, die voneinander verschiedene Brechungsindizes aufweisen, gebildet wird, und einen dielektrischen Spiegel bilden.

7. Verfahren zur Herstellung nach einem der Ansprüche 2 bis 6, **dadurch gekennzeichnet, dass** die Schicht aus transparentem Werkstoff (38) aus Harz ist.

8. Verfahren zur Herstellung nach Anspruch 7, **dadurch gekennzeichnet, dass** die Schicht aus transparentem Werkstoff (38) durch Einspritzen von Harz oder durch Thermoformen einer Harzfolie gebildet wird.

9. Reflektive oder transreflektive Flüssigkristall-Anzeigevorrichtung (1), umfassend eine Flüssigkristallzelle (2), deren Flüssigkristallmoleküle planar oder vertikal ausgerichtet sind, wobei diese Flüssigkristallzelle (2) aus einem vorderen transparenten Substrat (4), das sich auf der Seite eines Betrachters befindet, und einem hinteren, ebenfalls transparenten Substrat (8) gebildet ist, das sich unter dem vorderen Substrat (4) parallel und dazu beabstandet erstreckt, wobei diese beiden vorderen (4) und hinteren (8) Substrate mittels eines Versiegelungsrahmens (10) miteinander vereint sind, der eine dichte Schutzhülle (12) begrenzt, in der eine Flüssigkristallzusammensetzung eingeschlossen ist, das vordere (4) und das hintere (8) Substrat auf ihren einander zugewandten Seiten mit transparenten, elektrisch leitenden Elektroden (14) und Gegenelektroden (16) beschichtet sind, wobei die optischen Eigenschaften der Flüssigkristallzusammensetzung durch Anlegen eines elektrischen Feldes an den Kreuzungspunkt zwischen einer Elektrode (14) und einer entsprechenden Gegenelektrode (16) modifiziert werden, wobei die Flüssigkristallanzeigevorrichtung (1) mit einem reflektierenden Polarisationsfilm (24) versehen ist, um eine erste Komponente eines Lichts (26) zu absorbieren, das durch das vordere Substrat (4) in die Flüssigkristallzelle (2) eindringt, und um eine zweite Komponente des Lichts (26), das in einer Richtung orthogonal zu jener der ersten Komponente polarisiert ist, zu reflektieren, wobei der reflektierende Polarisationsfilm (24) einen absorbierenden Polarisator (32) umfasst, der mit einem zumindest teilweise reflektierenden Reflektor (34) kombiniert ist, der unter dem absorbierenden Polarisator (32) angeordnet ist, wobei der Reflektor (34) eine Schicht aus transparentem Werkstoff (38) umfasst, wobei die Schicht aus transparentem Werkstoff (38) eine ebene Vorderseite (44) und eine Rückseite (40) umfasst, die eine dekorative und/oder funktionelle Form aufweist, die durch den Betrachter (6) durch das vordere Substrat (4) der Flüssigkristallzelle (2) hindurch sichtbar ist, wobei der Reflektor (34) unter dem absorbierenden Polarisator (32) auf der Vorderseite anhand einer Klebstoffschicht (46) befestigt ist, wobei die Klebstoffschicht das Licht streut, um dem reflektierten Licht ein mattes oder satiniertes Aussehen zu verleihen, wobei der reflektierende Polarisationsfilm (24) über den absorbierenden Polarisator (32) anhand einer optisch transparenten Klebstoffschicht (30) an einer Unterseite (28) des hinteren Substrats (8) der Flüssigkristallzelle (2) befestigt ist.

10. Flüssigkristall-Anzeigevorrichtung nach Anspruch 9, **dadurch gekennzeichnet, dass** die zumindest teilweise reflektierende Schicht (42) metallisch ist.

11. Flüssigkristall-Anzeigevorrichtung nach Anspruch 10, **dadurch gekennzeichnet, dass** das Metall, aus dem die zumindest teilweise reflektierende Schicht (42) hergestellt wird, aus der Gruppe gebildet durch Silber, Aluminium, Nickel, Chrom, Titan, Platin, Palladium, Gold und den Legierungen dieser Metalle ausgewählt ist.

12. Flüssigkristall-Anzeigevorrichtung nach Anspruch 9, **dadurch gekennzeichnet, dass** die zumindest teilweise reflektierende Schicht (42) aus einer Vielzahl von Schichten aus dielektrischen Werkstoffen, die voneinander verschiedene Brechungsindizes aufweisen, gebildet wird, und einen dielektrischen Spiegel bilden.

13. Flüssigkristall-Anzeigevorrichtung nach einem der Ansprüche 9 bis 12, **dadurch gekennzeichnet, dass** die Schicht aus transparentem Werkstoff (38) aus Harz ist.

14. Uhrmachereistück, die eine Anzeigevorrichtung nach einem der Ansprüche 9 bis 13 umfasst.

## Claims

1. Method for manufacturing a reflective or transflective liquid crystal display device (1) comprising a liquid crystal cell (2) whose liquid crystal molecules are aligned in a planar or vertical manner, this liquid crystal cell (2) being formed of a transparent front substrate (4) located on the same side as an observer (6), and of a rear substrate (8), which is also transparent, and which extends under the front substrate (4), parallel to and at a distance therefrom, these two front (4) and rear (8) substrates being joined together by means of a sealing frame (10) which delimits a sealed enclosure (12) in which a liquid crystal composition is confined, the front substrate (4) and rear substrate (8) being coated on their opposite faces with transparent, electrically conductive electrodes (14) and counter-electrodes (16), the optical properties of the liquid crystal composition being modified by applying an electric field to the crosspoint between an electrode (14) and a corresponding counter-electrode (16), the liquid crystal display device (1) being provided with a reflective polarising film (24) arranged to absorb a first component of a light (26) which enters the liquid crystal cell (2) through the front substrate (4), and to reflect a second component of the light (26) polarised in a direction orthogonal to that of the first component, this reflective polarising film (24) comprising an absorbing polariser (32) combined with an at least partially reflective reflector (34) disposed beneath the absorbing polariser (32), the reflector comprising a layer of transparent material (38) comprising a rear face (40) and a planar front face (44), the method comprising the step consisting in raising the layer of transparent material (38) that the reflector (34) comprises to give it a decorative and/or functional shape visible to the observer (6) through the front substrate (4) of the liquid crystal cell (2), and the step of depositing an at least partially reflective layer (42) on said rear face (40) which has the raised shapes, then fastening this reflector (34) beneath the absorbing polariser (32) which is itself fastened against a lower face (28) of the rear substrate (8) by fastening the layer of transparent material (38) to the absorbing polariser (32) by means of a layer of adhesive which diffuses the light in order to give a matt or satin appearance to the reflected light; the adhesive layer being arranged on said front face.

2. Manufacturing method according to claim 1, **characterised in that** the reflective polarising film (24) formed from the at least partially reflective layer (42), the transparent material layer (38) and the absorbing polariser (32) is fastened via this absorbing polariser (32) to the lower face (28) of the rear substrate (8) by means of a layer of optically transparent adhesive (30).

3. Manufacturing method according to claim 2, **characterised in that** the at least partially reflective layer (42) is metallic.

4. Manufacturing method according to claim 3, **characterised in that** the metal is selected from the group formed by silver, aluminium, nickel, chromium, titanium, platinum, palladium, gold and the alloys of these metals.

5. Manufacturing method according to one of claims 3 and 4, **characterised in that** the at least partially reflective layer (42) is obtained by physical vapour deposition, evaporation or cathodic sputtering.

6. Manufacturing method according to claim 2, **characterised in that** the at least partially reflective layer (42) is formed from a plurality of layers of dielectric materials having refractive indices different from one another and forming a dielectric mirror.

7. Manufacturing method according to one of claims 2 to 6, **characterised in that** the layer of transparent material (38) is made of resin.

8. Manufacturing method according to claim 7, **characterised in that** the layer of transparent material (38) is formed by resin injection or by thermoforming a resin sheet.

9. Reflective or transflective liquid crystal display device (1) comprising a liquid crystal cell (2) whose liquid crystal molecules are aligned in a planar or vertical manner, this liquid crystal cell (2) being formed of a transparent front substrate (4) located on the same side as an observer, and of a rear substrate (8), which is also transparent, and which extends under the front substrate (4), parallel to and at a distance therefrom, these two front (4) and rear (8) substrates being joined together by means of a sealing frame (10) which delimits a sealed enclosure (12) in which a liquid crystal composition is confined, the front substrate (4) and rear substrate (8) being coated on their opposite faces with transparent, electrically conductive electrodes (14) and counter-electrodes (16), the optical properties of the liquid crystal composition being modified by applying an electric field to the crosspoint between an electrode (14) and a corresponding counter-electrode (16), the liquid crystal display device (1) being provided with a reflective polarising film (24) to absorb a first component of a light (26) which enters the liquid crystal cell (2) through the front substrate (4), and to reflect a second component of the light (26) polarised in a direction orthogonal to that of the first component, the reflective polarising film (24) comprising an absorbing polariser (32) combined with an at least partially reflective reflector (34) disposed beneath the absorbing polariser (32), the reflector (34) comprising a layer of transparent material (38), the layer of transparent material (38) comprising a planar front face (44) and a rear face (40) having a raised decorative and/or functional shape visible to an observer (6) through the front substrate (4) of the liquid crystal cell (2), the reflector (34) being fastened beneath the absorbing polariser (32) on said front face by means of a layer of adhesive (46), the layer of adhesive diffusing the light so as to give a matt or satin appearance to the reflected light; the reflective polarising film (24) being fastened against a lower face (28) of the rear substrate (8) of the liquid crystal cell (2) via the absorbing polariser (32) by means of a layer of optically transparent adhesive (30).

10. Liquid crystal display device according to claim 9, **characterised in that** the at least partially reflective layer (42) is metallic.

11. Liquid crystal display device according to claim 10, **characterised in that** the metal from which the at least partially reflective layer (42) is made is selected from the group formed by silver, aluminium, nickel, chromium, titanium, platinum, palladium, gold and the alloys of these metals.

12. Liquid crystal display device according to claim 9, **characterised in that** the at least partially reflective layer (42) is formed from a plurality of layers of dielectric materials having refractive indices different from one another and forming a dielectric mirror.

13. Liquid crystal display device according to one of claims 9 to 12, **characterised in that** the layer of transparent material (38) is made of resin.

14. Timepiece comprising a display device according to one of claims 9 to 13.
